# EUROPEAN PATENT APPLICATION

(11) **EP 1 868 203 A1**
(43) Date of publication of application: **19.12.2007**
(21) Application number: 07109200.1
(22) Date of filing: 30.05.2007
(51) Int. Cl.: G11B 27/034, G11B 27/32

(54) **Information recording apparatus and information playback apparatus**

(30) Priority: 13.06.2006 JP 2006163770
(71) Applicant: Kabushiki Kaisha Toshiba, Minato-ku, Tokyo 105-8001 (JP)
(72) Inventor: Shibutani, Manabu Toshiba Corporation,, Minato-ku, Tokyo 105-8001 (JP)
(74) Representative: Henkel, Feiler & Hänzel

(57) **Abstract**

According to one embodiment, an information recording apparatus which converts an HD DVD Video Recording (HD DVD-VR) content recorded based on the HD DVD-VR format into an interoperable content compatible with the HD DVD-Video format, and records the interoperable content, generates (ST12) a playlist file and video title set information file based on navigation data updated by an edit operation or the like, and generates (ST13) an interoperable content which includes the playlist file, the video title set information file, and video objects included in the ED DVD-VR content.

## Description

One embodiment of the invention relates to an information recording apparatus for recording data compatible with the format of an HD DVD as a next-generation optical disc. Another embodiment of the invention relates to an information playback apparatus for playing back data compatible with the HD DVD format.

As is known, there are various formats for the existing DVD. For example, the DVD Video format (to be referred to as DVD-Video format hereinafter) and DVD Video Recording format (to be referred to as DVD-VR format hereinafter) are known.

A player compatible with only the DVD-Video format cannot play back video information recorded based on the DVD-VR format. In order to allow the player compatible with only the DVD-Video format to play back the video information recorded based on the DVD-VR format, data conversion is required in advance. That is, the video information recorded based on the DVD-VR format need be converted into that based on the DVD-Video format. Jpn. Pat. Appln. KOKAI Publication No. 2003-199046 discloses a technique for converting video information recorded based on the DVD-VR format into that based on the DVD-Video format.

HD DVD discs as the next-generation optical discs that can support high-definition video recording have been standardized with respect to the aforementioned existing DVD formats. The HD DVD format also includes the HD DVD Video format (to be referred to as HD DVD-Video format hereinafter) and HD DVD Video Recording format (to be referred to as HD DVD-VR format hereinafter), and compatibility between these formats is an issue.

It is an object of the invention to provide an information recording apparatus which is excellent to convert an HD DVD-VR content compatible with the HD DVD-VR format into an interoperable content compatible with the HD DVD-Video format and record the interoperable content. It is another object of the invention to provide an information playback apparatus which can play back the interoperable content.

An information recording apparatus according to one aspect of the invention is an information recording apparatus, which converts an HD DVD Video Recording (HD DVD-VR) content recorded in an HD DVD-VR format into an interoperable content compatible with the HD DVD-Video format and records the interoperable content, comprising: an analysis unit configured to analyze navigation data included in the HD DVD-VR content; an update unit configured to update the navigation data in response to an edit operation of the HD DVD-VR content; a generation unit configured to generate a playlist file and a video title set information file based on the navigation data updated by the update unit, and to generate the interoperable content which includes the playlist file, the video title set information file, and video objects included in the HD DVD-VR content; and a recording unit configured to record the interoperable content generated by the generation unit at a predetermined recording location, wherein the navigation data included in the HD DVD-VR content navigates playback of the video objects included in the HD DVD-VR content, the playlist file included in the interoperable content indicates the configuration of the title and chapters made up of video objects included in the interoperable content, and the video title set information included in the interoperable content indicates attributes of the video objects included in the interoperable content.

An information playback apparatus according to one aspect of the invention, comprises: a read unit configured to read a configuration file from a predetermined recording location; and a playback unit configured to play back an interoperable content compatible with the HD DVD-Video format from the predetermined recording location based on the configuration file read by the read unit.

The invention can be more fully understood from the following detailed description when taken in conjunction with the accompanying drawings, in which:
FIG. 1 is a schematic block diagram showing the arrangement of a recorder (information recording apparatus) for recording an interoperable content and a player (information playback apparatus) for playing back the interoperable content according to an embodiment of the invention;
FIG. 2 is a flowchart showing the first generation processing of an interoperable content according to the embodiment;
FIG. 3 is a flowchart showing the second generation processing of an interoperable content according to the embodiment;
FIG. 4 is a flowchart showing the generation sequence of files for an interoperable content;
FIG. 5 is a flowchart showing the startup sequence by a DVD player according to the embodiment;
FIG. 6 is a view showing the relationship between the HD DVD-VR content and interoperable content according to the embodiment;
FIG. 7 is a table (No. 1) showing an overview of values to be filled in data fields of VTSI for an interoperable content according to the embodiment;
FIG. 8 is a table (No. 2) showing an overview of values to be filled in data fields of VTSI for an interoperable content according to the embodiment;
FIG. 9 is a table (No. 3) showing an overview of values to be filled in data fields of VTSI for an interoperable content according to the embodiment;
FIG. 10 is a view showing conversion from the HD DVD-VR content into the interoperable content according to the embodiment;
FIG. 11 is a table showing an overview of values to be filled in data fields of a configuration file for an interoperable content according to the embodiment;
FIG. 12 shows an example of the configuration of a standard content according to the embodiment;
FIG. 13 shows an example of the configuration of an advanced content according to the embodiment;
FIG. 14 shows a playlist generated based on the HD DVD-VR content according to the embodiment; and
FIG. 15 shows the playlist generated based on the HD DVD-VR content (sequel of FIG. 14) according to the embodiment.

Various embodiments according to the invention will be described hereinafter with reference to the accompanying drawings. In general, according to one embodiment of the invention, an information recording apparatus is an information recording apparatus, which converts an HD DVD Video Recording (HD DVD-VR) content recorded in an HD DVD-VR format into an interoperable content compatible with the HD DVD-Video format and records the interoperable content, comprising: an analysis unit configured to analyze navigation data included in the HD DVD-VR content; an update unit configured to update the navigation data in response to an edit operation of the HD DVD-VR content; a generation unit configured to generate a playlist file and a video title set information file based on the navigation data updated by the update unit, and to generate the interoperable content which includes the playlist file, the video title set information file, and video objects included in the HD DVD-VR content; and a recording unit configured to record the interoperable content generated by the generation unit at a predetermined recording location, wherein the navigation data included in the HD DVD-VR content navigates playback of the video objects included in the HD DVD-VR content, the playlist file included in the interoperable content indicates the configuration of the title and chapters made up of video objects included in the interoperable content, and the video title set information included in the interoperable content indicates attributes of the video objects included in the interoperable content.

One embodiment of the invention will be described below with reference to the accompanying drawings.

The HD DVD format includes the HD DVD Video format (to be referred to as HD DVD-Video format hereinafter) and HD DVD Video Recording format (to be referred to as HD DVD-VR format hereinafter). An HD DVD-Video player cannot play back an HD DVD-VR content recorded based on the HD DVD-VR format intact. To solve this problem, an HD DVD-VR recorder that supports the HD DVD-VR format can have a function of converting an HD DVD-VR content into an interoperable content compatible with the HD DVD-Video format, and recording the interoperable content. In this way, the HD DVD-Video player can play back the interoperable content recorded by the HD DVD-VR recorder.

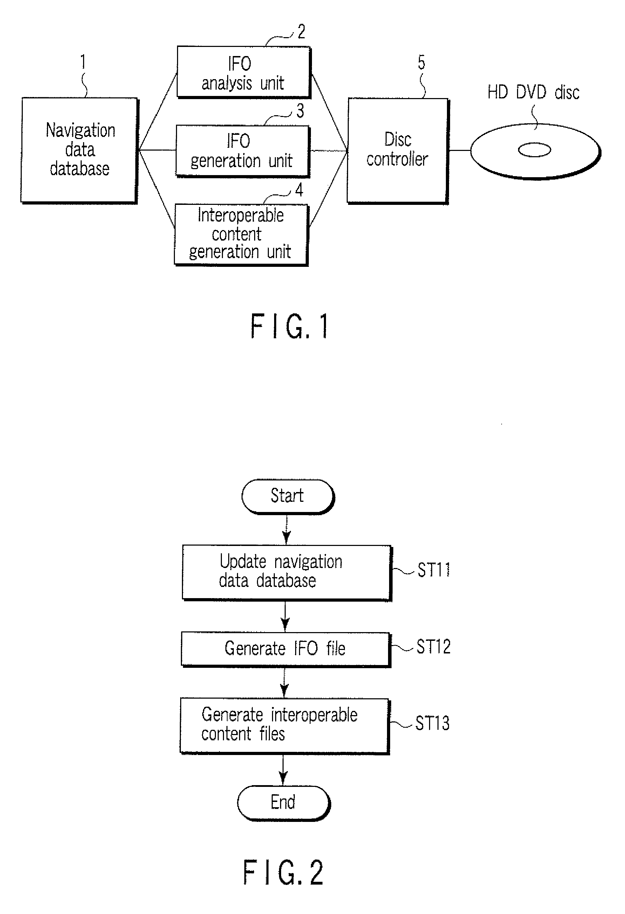

FIG. 1 shows an example of a schematic arrangement of a recorder (information recording apparatus) that records an interoperable content. Note that FIG. 1 also shows a player (information playback apparatus) that plays back an interoperable content. As shown in FIG. 1, the recorder comprises a navigation data database 1, IFO analysis unit 2, IFO generation unit 3, interoperable content generation unit 4, and disc controller 5.

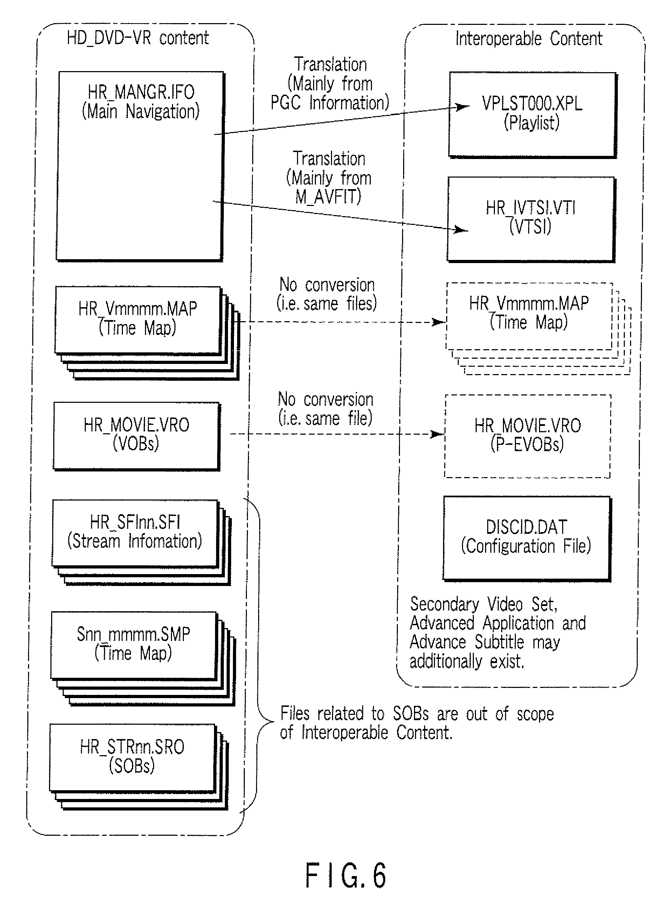

The generation processing of an interoperable content by the recorder shown in FIG. 1 will be described below. FIG. 6 shows the relationship between the HD DVD-VR content and interoperable content. FIG. 2 is a flowchart showing a first generation example of an interoperable content.

The recorder shown in FIG. 1 records, for an interoperable content, at least:
- a configuration file;
- a playlist file; and
- a video title set information (VTSI) file in addition to files recorded in the HD-VR format.

Also, image files and font files need be recorded upon generating a content which displays menus using markup files.

The playlist file is information indicating the configurations and the like of a title and chapters including VOBs (video objects). The VTSI file is information indicating attributes and the like of VOBs.

When an HD DVD-VR disc is inserted into the recorder, the disc controller 5 of the recorder starts read and write accesses of data with respect to the inserted disc. As a result, the IFO analysis unit 2 analyzes an HR_MANGR.IFO file (to be referred to as an IFO file hereinafter) as navigation data recorded on the disc. The navigation data navigates playback of VOBs (video objects) and SOBs (stream objects) included in an HD DVD-VR content. The analysis result of the navigation data is stored in the navigation data database 1.

After that, when the user makes video recording and edit operations on the disc, the navigation data database 1 updates the contents of the navigation data database in response to these operations (ST11). The IFO generation unit 3 generates an IFO file based on information of the updated navigation data database (ST12). The disc controller 5 records the generated IFO file on the disc.

The interoperable content generation unit 4 generates files (configuration file, playlist file, and video title set information file) for an interoperable content (ST13), and the disc controller 5 records the generated files on the disc. Note that time map data and VOBs (video objects) which are included in the HD DVD-VR content are respectively handled as time map data and P-EVOBs (primary enhanced video objects) in the interoperable content without being converted. As described above, the interoperable content include the time map data and P-EVOBs in addition to the configuration file, playlist file, and video title set information file.

When files are recorded in the above sequence, no information difference is generated between the IFO file and the files for the interoperable content.

Practical examples (1) to (3) of processing for checking whether or not an interoperable content is to be updated will be described below.
(1) The recorder plays back a title in a HD-VR disc in response to a playback instruction from the user, and stops the playback halfway through in response to a stop instruction from the user. At this time, the recorder records a resume position so that the playback can restart from the stop position in the next playback operation. In an IFO file, the resume position is recorded in HDVR_MGI/VMGI_MAT/DISC_RSM_MRKI as that of the whole disc, in HDVR_MGI/PL_SRPT/PL_SRP/PL_RSM__MRKI as that of a playlist title, and in PGCI/PGI/PG_RMS_MRKI as that of an original title. When only these pieces of information are updated in the IFO file, the files for the interoperable content do not include any items corresponding to these pieces of information. In such case, the interoperable content need not be updated.
(2) The recorder sets thumbnail images on a disc in response to a setting instruction of thumbnail images used to identify the disc and titles from the user. When the user designates a given frame of video data on the disc as a thumbnail, that one frame is set as a thumbnail image. More specifically, the position of this video data is stored in navigation data. In the IFO file, the position of this video data is recorded in HDVR_MGI/VMGI_MAT/DISC_REP_PICTI as the thumbnail position of the whole disc, in HDVR_MGI/PL_SRPT/PL_SRP/PL_REP_PICTI as that of a playlist title, and in PGCI_PGI/PG_REP_PICTI as that of an original title. When only these pieces of information are updated, the files for the interoperable content do not include any items corresponding to these pieces of information. In such case, the interoperable content need not be updated.
(3) Assume that a certain title is made up of only stream cells. For example, assume that a new chapter is created in this title in response to a chapter creation operation of the user. In this case, the value of STRA_CI/STRA_C_GI/C_EPI_Ns changes, and new STRA_CI/STRA_C_EPI is added. However, in the interoperable content, stream cells are ineligible for playback. Therefore, when only these pieces of information are updated, the files for the interoperable content do not include any items corresponding to these pieces of information. In such case, the interoperable content need not be updated.

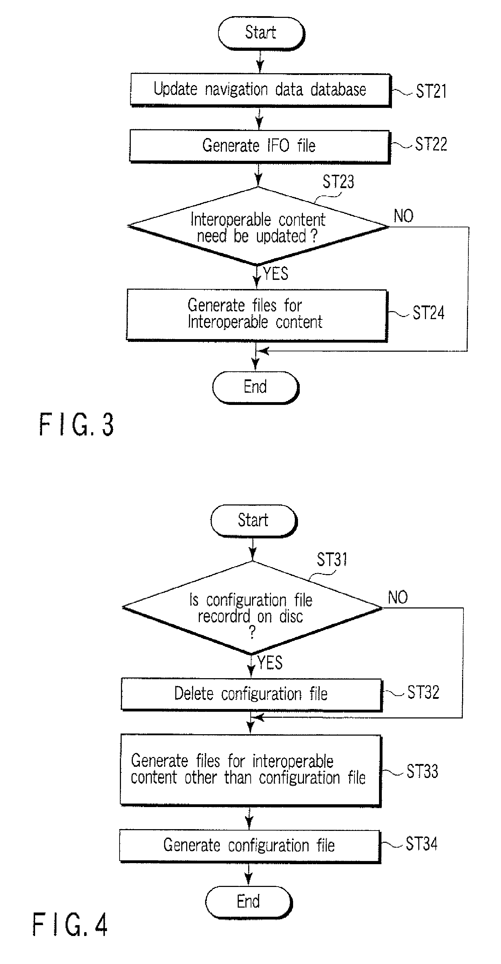

Furthermore, generation of an interoperable content by the recorder shown in FIG. 1 will be described below. FIG. 3 is a flowchart showing a second generation example of an interoperable content.

When the user makes video recording and edit operations on the disc, the navigation data database is updated (ST21). The IFO generation unit 3 then generates an IFO file based on the information of the updated navigation data database (ST22). The disc controller 5 records the generated IFO file on a disc. Furthermore, it is checked if updating of the navigation data database influences the interoperable content (ST23). If updating of the navigation data database does not influence the interoperable content (NO in ST23), files for the interoperable content are not generated. If updating of the navigation data database influences the interoperable content (YES in ST23), files for the interoperable content are generated (ST24), and the disc controller 5 records the generated files on the disc. Note that time map data and VOBs (video objects) included in the HD DVD-VR content are respectively handled as time map data and P-EVOBs (primary enhanced video objects) in the interoperable content without being converted. As described above, the interoperable content includes the time map data and P-EVOBs in addition to the configuration file, playlist file, and video title set information file.

The navigation data database stores various kinds of information. For example, the database stores information indicating the data position in a title used to generate a thumbnail image upon displaying the title by a GUI (graphical user interface) function of the recorder. Such information must be recorded in the IFO file but is not always required in the files for the interoperable content.

Upon updating the navigation data database, whether or not only such information is updated is checked, and the files for the interoperable content are not generated when they need not be generated.

With this sequence, unnecessary write accesses to the disc can be prevented, and the storage area in the disc can be saved.

The generation sequence of files for the interoperable content will be described below. FIG. 4 is a flowchart showing an example of the generation sequence of files for the interoperable content.

When files for the interoperable content have already written in the disc, a configuration file exists on the disc. It is checked first whether or not this configuration file exists on the disc (ST31). If the configuration file exists on the disc (YES in ST31), it is deleted (ST32).

Next, files for the interoperable content other than the configuration file are written in the disc (ST33), and the configuration file is finally written in the disc (ST34).

With this sequence, even when the file generation is interrupted due to an electric power failure or the like, the generated disc never becomes one having inconsistencies as an interoperable content.

The reasons for this will be described below.

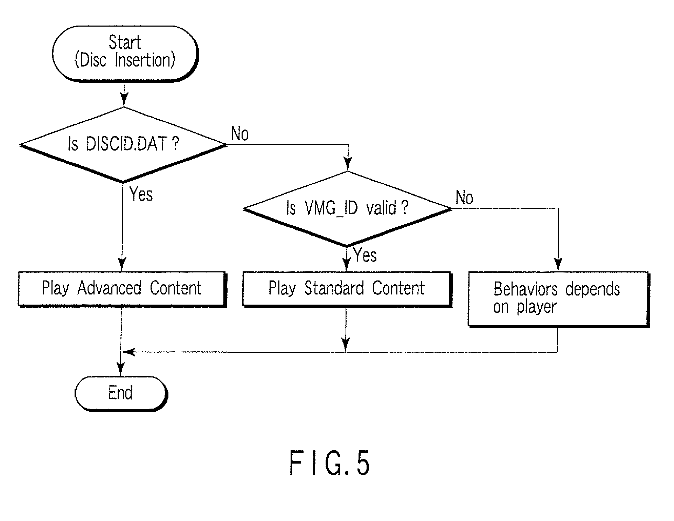

The playback processing by the player that plays back HD DVD-Video discs will be briefly described below. The player refers to a configuration file (= DISCID.DAT) recorded on a disc so as to determine what content is recorded in the disc, as shown in FIG. 5. If this configuration file is found, it is determined that the recorded content is an advanced content or interoperable content; otherwise, it is determined that the recorded content is a content other than the advanced content or interoperable content.

Assume that the configuration file is not deleted from the disc first upon generating files for the interoperable content. In this case, if the generation is interrupted due to an electric power failure or the like during generation of files for the interoperable content, the configuration file remains stored in that disc. That is, when such disc is inserted into the player, since it includes the configuration file, a content recorded on that disc is determined as an advanced content or interoperable content due to the presence of the configuration file, and related files are then referred to. However, the disc may store both old files before generation of the files for the interoperable content and new files after generation, or may store a file in the middle of generation. Upon referring to such files, the player may make an error or may find inconsistency in them.

On the other hand, if the configuration file is deleted from the disc first upon generating files for the interoperable content, even when the file generation is interrupted due to an electric power failure or the like, that disc does not store the configuration file. That is, even when such disc is inserted into the player, it does not store any configuration file. Hence, the content recorded on this disc is not determined as an interoperable content. Hence, inconsistent files are not referred to.

For the same reason as above, the generated configuration file is finally written in the disc after the generated interoperable content is written in the disc.

As described above, upon generating the interoperable content, files can be generated without any inconsistencies with the navigation data in the HD DVD-VR format or in the interoperable content.

Points of this embodiment will be summarized below.
(1) A recorder/player which records information on an HD DVD medium in the HD DVD-VR format has a function of generating navigation data specified in the HD DVD-VR format and an interoperable content. Furthermore, this recorder/player generates or updates the interoperable content based on the latest navigation data which is generated or updated immediately before the interoperable content is generated or updated.
(2) In addition, the recorder/player has a checking function of checking whether or not the interoperable content need be updated upon updating the navigation data. That is, the recorder/player updates the interoperable content only when it need be updated.
(3) In addition, the recorder/player generates a configuration file after all the files are written.
(4) In addition, the recorder/player has a checking function of checking if a configuration file exists on a medium. Whether or not the configuration file exists on the medium is checked before the interoperable content is generated or updated. If the configuration file exists, that configuration file is deleted.

An additional explanation will be given below about the interoperable content.

The interoperable content is defined to allow an HD DVD-Video player to play back an HD DVD-VR content on a disc.

The interoperable content is a subset of an advanced content defined in the HD DVD-Video format except for some definitions related to video objects.

Some parameters or functions related to video objects are not supported in video objects of an advanced content in the HD DVD-Video format. However, if an HD DVD-Video player has a function of playing back the interoperable content, it supports these parameters or functions. Therefore, video objects for the HD DVD-VR content are normally used as those for the interoperable content without being converted.

Navigation data of the interoperable content is a subset of navigation data of an advanced content in the HD DVD-Video format. Therefore, navigation data of an HD DVD-VR content is converted into that of the interoperable content. The navigation data supported for the interoperable content especially does not have restrictions as long as it conforms to the format of an advanced content in the HD DVD-Video format.

An example of the method of converting the navigation data is as follows.

Generation of the interoperable content is an optional function of the recorder. When the recorder supports generation of the interoperable content, conversion rules are applied.

The basic concept of conversion from the HD DVD-VR content into the interoperable content will be explained below. The interoperable content is mostly a subset of an advanced content except for some differences. The interoperable content includes at least one playlist, one primary video set (called an interoperable VTS), and one configuration file. The primary video set (i.e., interoperable VTS) further includes video title set information (VTSI), video title set time map information (VTS_TMAP), and primary enhanced video objects (P-EVOBs).

Furthermore, the interoperable content may include a secondary video set, advanced application, and advanced subtitle defined in the advanced content.

In order to attain playback as the interoperable content, the disc must include the playlist, VTSI, VTS_TMAP, P-EVOBs, and configuration file. The VTS_TMAP is equivalent to VTMAP defined in the HD DVD-VR format. Also, a P-EVOB is equivalent to a VOB defined in the HD DVD-VR format. Therefore, an HD DVD-Video player can use time map files and VOB files defined in the HD DVD-VR format without any conversion processing. Hence, in order to attain playback as interoperable content by the HD DVD-Video player, one VTSI file, one playlist file, and one configuration file must further be generated.

FIG. 6 shows the basic concept of the relationship among the conversion processing, HD DVD-VR content, and interoperable content. The VTSI is generated mainly based on information of an M_AVFIT (especially, M_VOB_STIs and M_VOBIs) in an HR_MANGR.IFO file. The playlist is generated mainly based on information of PGC information (i.e., ORG_PGCI and UD_PGCIs) in the HR_MAMGR.IFO file. The contents of the configuration file are permanent in case of the interoperable content. The interoperable content does not include any navigation file related to the stream object file and the stream object file.

Rules associated with directories and files will be described below.

Upon generation of the interoperable content, the following rules are applied.
- The playlist file is allocated under an "ADV_OBJ" directory present immediately below the root directory.
- The file name of the playlist is determined as "VPLST000.XPL" for the interoperable content.
- As in the time map files and VOB file, the VTSI file is also allocated under a "DVD HDVR/HDVR_VOB" directory.
- The file name of the VTSI is determined as "HR_IVTSI.VTI" for the interoperable content.
- As defined in the HD DVD-Video format, the file names of the time map files and VOB file are respectively "HR_Vmmmm.MAP" (mmmm: 0001 to 1998) and "HR_MOVIE.VRO.
- The configuration file is allocated under the "ADV_OBJ" directory present immediately below the root directory.
- The file name of the configuration file is determined as "DISCID.DAT" in the HD DVD-Video format.
- When the disc includes at least one of the VTSI (HR_IVTSI.VTI), playlist (VPLST000.XPL), and configuration file (DISCID.DAT), it includes all these files, which match each other. Furthermore, these files match the time map files (HR_Vmmmm.MAP) and VOB file (HR_MOVIE.VRO). When the HD DVD-VR content is updated and influences the corresponding VTSI or playlist, a recorder which cannot update the VTSI and playlist deletes the VTSI, playlist, and configuration file. In this case, the "ADV_OBJ" directory need not be deleted.

Details of generation of the VTSI will be described below.

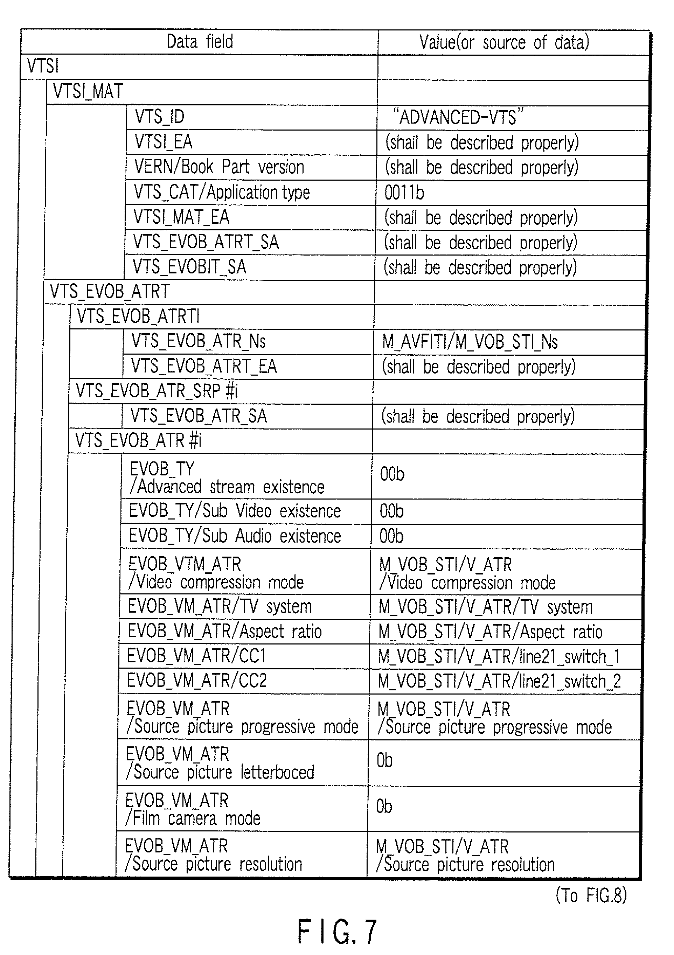

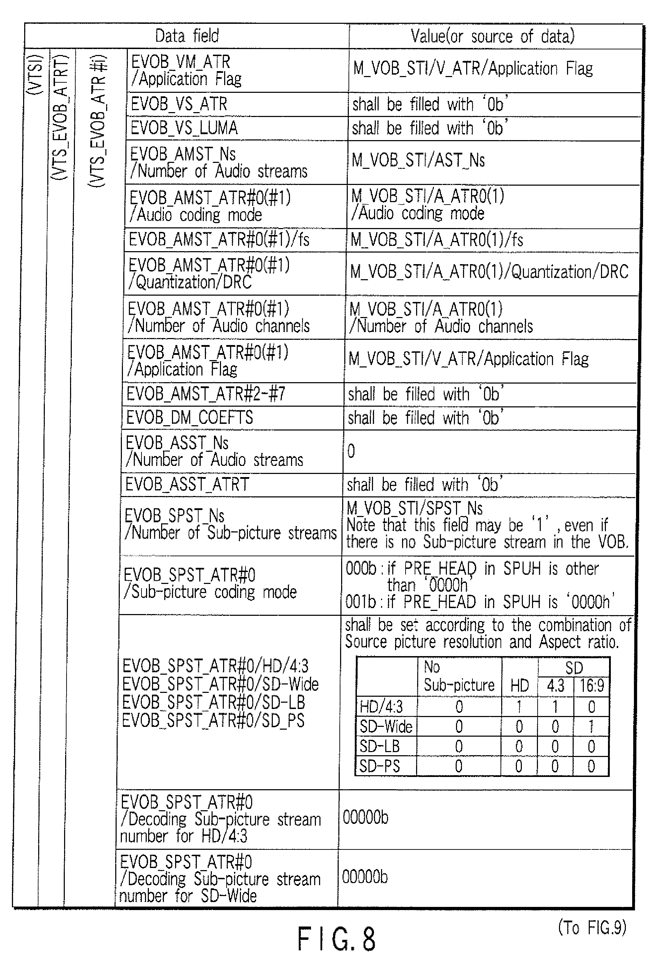

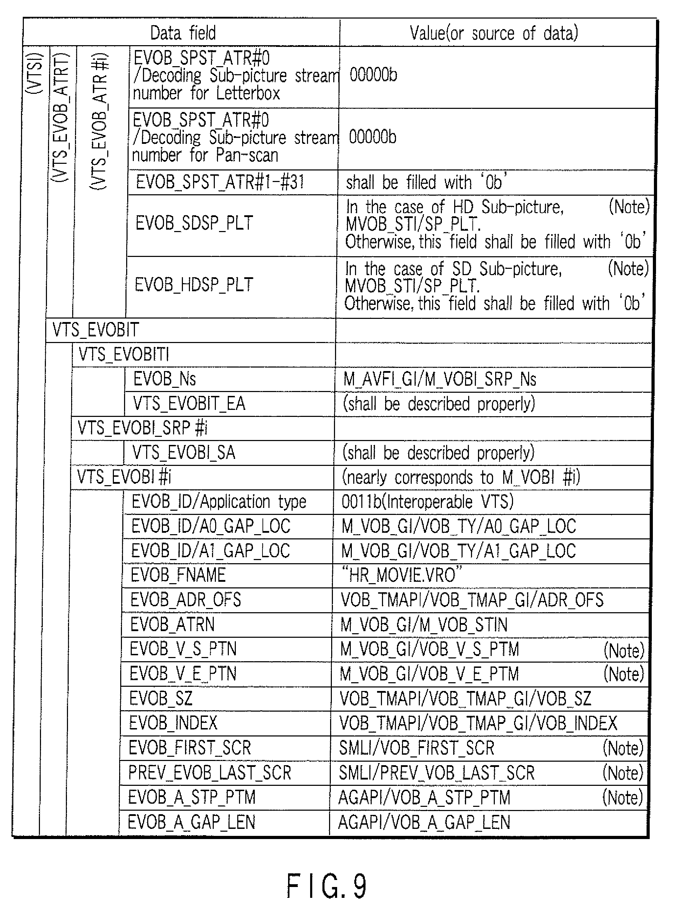

Upon generation of the interoperable content, one VTSI file "HR_IVTSI.VTI" is generated. FIGS. 7, 8, and 9 show an overview of values to be filled in data fields of the VTSI for the interoperable content. Note that FIGS. 7 to 9 are a series of tables.

Information in VTS_EVOB_ATR is mainly copied or extracted from corresponding M_VOB_STI. Information in VTS_EVOBI is mainly copied or extracted from corresponding M VOBI.

Details of generation of the playlist will be explained below.

Upon generation of the interoperable content, one playlist file "VPLST000.XPL" is generated.

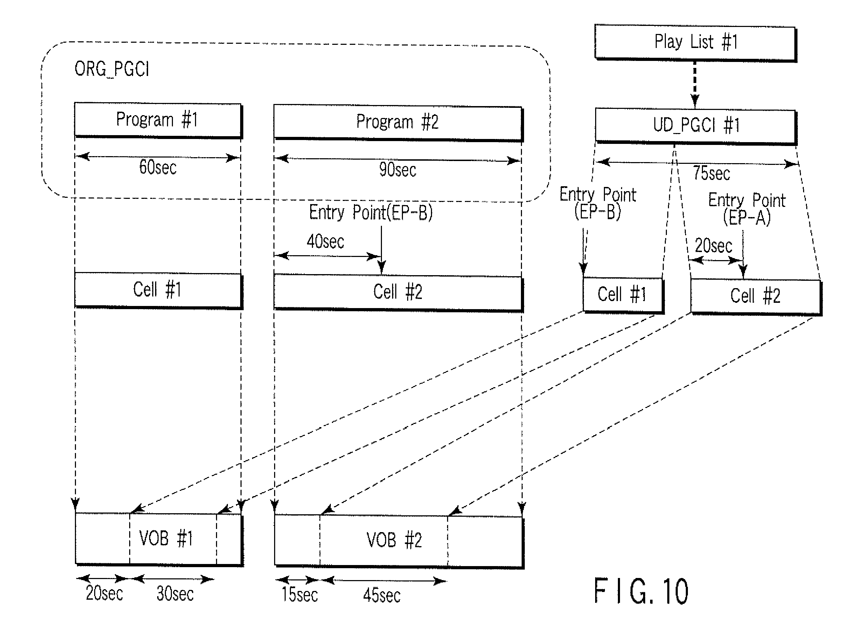

In order to explain generation of the playlist, a simple example of the HD DVD-VR content will be assumed. FIG. 10 shows conversion from the HD DVD-VR content into the interoperable content.

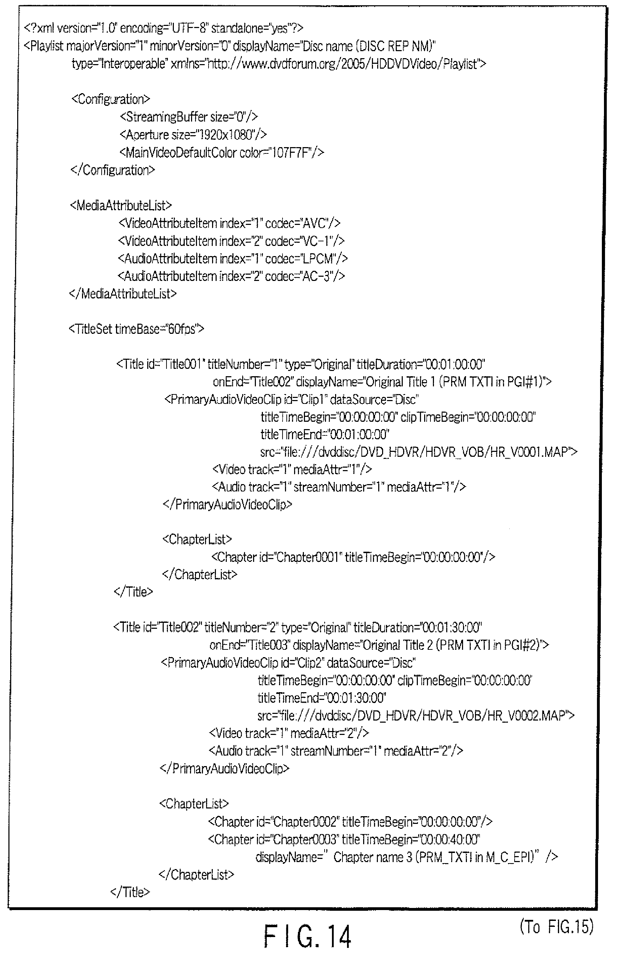

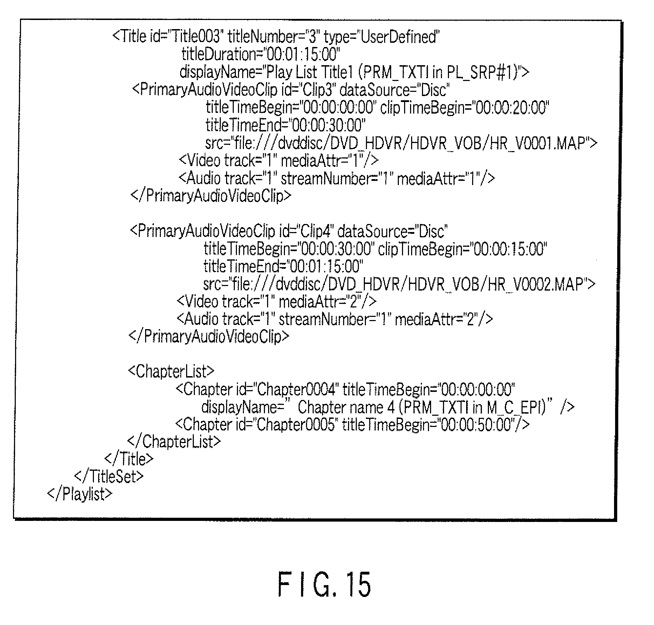

FIGS. 14 and 15 show an example of a playlist generated from the HD DVD-VR content shown in FIG. 10.

The playlist for the interoperable content allows a flexible description. The playlist described in FIGS. 14 and 15 is an example, and is generated based on the following assumptions.
- One "title" corresponds to a program (PG) or playlist (PL) in the HD DVD-VR format.
- One "chapter" corresponds to an entry point (M_C_EPI) in the HD DVD-VR format. If there is no entry point at the beginning of the PG or PL, the chapter is always present at the head of the title.
- "Display name" in the playlist corresponds to a disc representative name (DISC_REP_NM) in the HD DVD-VR format.
- "Display name" in the title corresponds to primary text information (PRM_TXTI) of the PG or PL in the HD DVD-VR format.
- "Display name" in the chapter corresponds to primary text information (PRM_TXTI) of the entry point (Type EP-B) in the HD DVD-VR format.
- "Title time" in the title is obtained from C_V_S_PTM and C_V_E_PTM in the HD DVD-VR format.
- "titleTimeBegin" and "titleTimeEnd" in a primary audio video clip are obtained from C_V_S_PTM and VOB_V_S_PTM in the HD DVD-VR format.
- "clipTimeBegin" in the primary audio video clip is obtained from C_V_S_PTM and VOB_V_S_PTM in the HD DVD-VR format.
- "titleTimeBegin" in the chapter is obtained from EP_PTM C_V_S_PTM and C_V_E_PTMs in the HD DVD-VR format.
- In order to allow playback of all titles, an attribute "onEnd" of each title (except for the last title) designates the next title.

Details of generation of the configuration file will be described below.

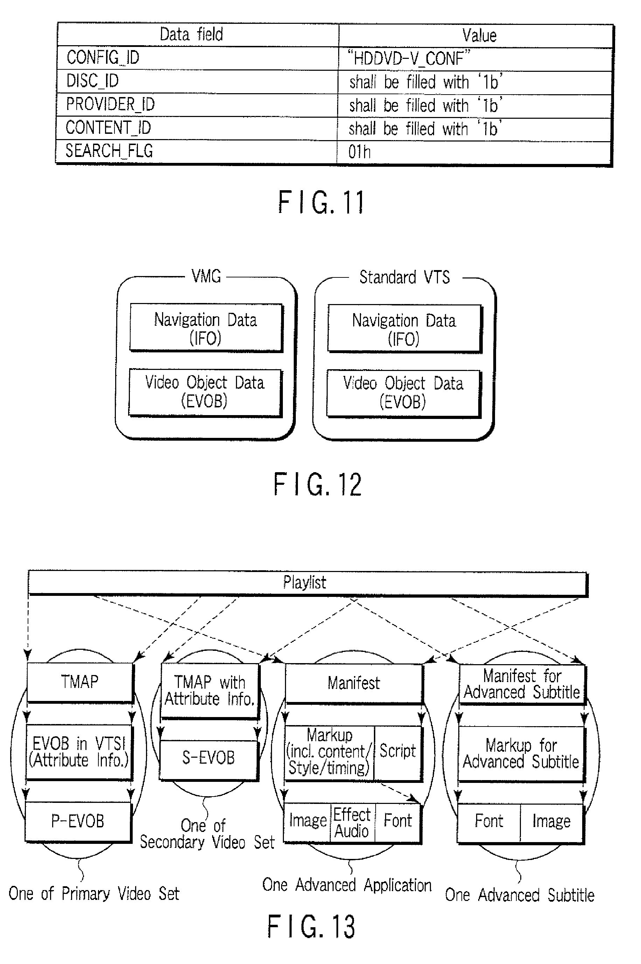

Upon generation of the interoperable content, one configuration file ("DISCID.DAT") is generated. FIG. 11 shows an overview of values to be filled in data fields of the configuration file for the interoperable content.

A few points to note in generation of the interoperable content will be described below.

Since SOBs (and navigation data associated with SOBs) fall outside the scope of the interoperable content, data structures such as STRA_CI and STRB_CI must be excluded from the conversion processing to the interoperable content. As a result, the total number of titles often becomes less than the sum total of all the programs (PGs) and playlists (PLs) of, e.g., the HD DVD-VR content.

Temporarily erased M_VOBs may not often be included in the interoperable content. In this case, the total number of P-EVOBs often becomes less than the total number of M_VOBs.

In the above description, the navigation data of the interoperable content is assumed to be generated from that of the HD DVD-VR content by "conversion". However, an actual implementation method is not limited to the conversion processing. In some implementation methods, the VTSI, playlist, and configuration file may be generated before the disc is unloaded from the recorder. Alternatively, in another implementation method, when the HD DVD-VR content is modified by the recorder, the VTSI, playlist, and configuration file may be updated.

An additional explanation will be given below about contents.

As will be described below, two types of contents are defined. One is a standard content, and the other is an advanced content.

The standard content includes navigation data and video object data on a disc. The advanced content includes advanced navigation files such as a playlist file, manifest file, markup file, and script file, and advanced data such as a primary video set/secondary video set, and advanced elements (image, audio, text, and the like). At least one playlist and primary video set are recorded in the disc including the advanced content. Other data are recorded on the disc and can be transferred from a server. As shown in FIG. 12, the standard content basically includes one VMG space and one or more VTS spaces.

The advanced content implements more interactiveness by expanding audio and video implemented by the standard content. The advanced content includes:
- playlist
- primary video set
- secondary video set
- advanced application
- advanced subtitle

The playlist provides playback information in presentation objects described in FIG. 13. For example, in order to play back the primary video set, the player reads a TMAP file using a URI described in the playlist, interprets EVOBI with reference to the TMAP, and accesses an appropriate P-EVOB defined by the EVOBI.

The playlist file is described in XML, and one or more playlist files are allocated on the disc. The player interprets the playlist file first to play back the advanced content. The playlist file includes:
- object mapping information
- track number assignment information
- track navigation information
- resource information
- playback sequence information
- system configuration information
- scheduled control information

The advanced application includes one manifest file, markup file (including content/style/timing/layout information), script file, image file, effect audio file, font file, and other files.

## Claims

1. An information recording apparatus, which converts an HD DVD Video Recording (HD DVD-VR) content recorded in an HD DVD-VR format into an interoperable content compatible with the HD DVD-Video format and records the interoperable content, **characterized by** comprising:
an analysis unit (2) configured to analyze navigation data included in the HD DVD-VR content;
an update unit (1) configured to update the navigation data in response to an edit operation of the HD DVD-VR content;
a generation unit (3, 4) configured to generate a playlist file and a video title set information file based on the navigation data updated by the update unit, and to generate the interoperable content which includes the playlist file, the video title set information file, and video objects included in the HD DVD-VR content; and
a recording unit (5) configured to record the interoperable content generated by the generation unit at a predetermined recording location,
wherein the navigation data included in the HD DVD-VR content navigates playback of the video objects included in the HD DVD-VR content,
the playlist file included in the interoperable content indicates the configuration of the title and chapters made up of video objects included in the interoperable content, and
the video title set information included in the interoperable content indicates attributes of the video objects included in the interoperable content.

2. The apparatus according to claim 1, **characterized in that** the update unit checks in response to updating of the navigation data if the interoperable content need be updated, and
the generation unit updates the interoperable content based on the update checking result of the interoperable content, and generates the updated interoperable content.

3. The apparatus according to claim 1, **characterized in that** the generation unit generates a configuration file indicating a configuration of the playlist file and the video title set information file, and
the recording unit finally records the configuration file upon recording the interoperable content.

4. The apparatus according to claim 1, **characterized in that** when a configuration file is recorded at the predetermined recording location, the recording unit deletes the configuration file which is recorded in advance, starts recording of the interoperable content, and finally records the configuration file generated by the generation unit.

5. An information playback apparatus **characterized by** comprising:
a read unit (5) configured to read a configuration file from a predetermined recording location; and
a playback unit (5) configured to play back an interoperable content compatible with the HD DVD-Video format from the predetermined recording location based on the configuration file read by the read unit.

6. An information recording apparatus, which converts an video recording first content recorded in a first format into an interoperable second content compatible with a second format and records the interoperable content, **characterized by** comprising:
an analysis unit (2) configured to analyze navigation data included in the first content;
an update unit (1) configured to update the navigation data in response to an edit operation of the first content;
a generation unit (3, 4) configured to generate a playlist file and a video title set information file based on the navigation data updated by the update unit, and to generate the interoperable second content which includes the playlist file, the video title set information file, and video objects included in the first content; and
a recording unit (5) configured to record the interoperable second content generated by the generation unit at a predetermined recording location,
wherein the navigation data included in the first content navigates playback of the video objects included in the first content,
the playlist file included in the interoperable second content indicates the configuration of the title and chapters made up of video objects included in the interoperable second content, and
the video title set information included in the interoperable second content indicates attributes of the video objects included in the interoperable second content.
